# EUROPÄISCHE PATENTANMELDUNG

(11) **EP 1 265 146 A2**
(43) Veröffentlichungstag der Anmeldung: **11.12.2002**
(21) Anmeldenummer: 02010295.0
(22) Anmeldetag: 21.05.2002
(51) Int. Cl.: G06F 11/36

(54) **Fehlersuchverfahren und Fehlersuchvorrichtung**

(30) Priorität: 05.06.2001 DE 10127170
(71) Anmelder: Infineon Technologies AG, 81669 München (DE)
(72) Erfinder: Henftling, Renate, 82256 Fürstenfeldbruck (DE); Ecker, Wolfgang, Dr., 81375 München (DE); Zinn, Andreas, 80807 München (DE); Bauer, Matthias, Dr., 83624 Otterfing (DE); Zambaldi, Martin, 81739 München (DE)
(74) Vertreter: Banzer, Hans-Jörg, Dipl.-Ing.

(57) **Zusammenfassung**

Zur vereinfachten Bedienung und Kontrolle der Fehlersuche in einem System (1) mit mehreren unterschiedlichen Modellen (2, 3, 4), wie beispielsweise einem Hardware-Modell, einem Software-Programm und einem Testbench-Modell, aktiviert der Benutzer einen einheitlichen Debugger (11), der seinerseits verschiedene untergeordnete Debugger (5, 6, 7) aufruft und ausführt, welche jeweils den unterschiedlichen Modellen (2, 3, 4) zugeordnet sind. Die untergeordneten Debugger (5, 6, 7) greifen dann jeweils auf die ihnen zugeordneten unterschiedlichen Modelle zum Ausführen entsprechender Fehlersuchoperationen zu.

## Beschreibung

Die vorliegende Erfindung betrifft ein Fehlersuchverfahren für ein System mit unterschiedlichen Simulationsmodellen, wie beispielsweise einem Hardware-Modell, einem Software-Programm und/oder einem Testbench-Modell, sowie eine Vorrichtung zur Fehlersuche in einem System mit derartigen unterschiedlichen Simulationsmodellen, welche bevorzugt beim Entwurf elektronischer Schaltungen einsetzbar ist, d.h. in diesem Fall handelt es sich bei dem zu simulierenden System um eine elektronische Schaltung.

Es gibt zu simulierende Systeme, die mittels einer kontrollierten und instrumentierten Abarbeitung von Programmschritten (sog. Debuggen) in einer Testumgebung auf Fehler untersucht werden sollen und durch unterschiedliche Simulationsmodelle simuliert werden. Im Rahmen dieser Erfindung werden unter dem Begriff "Simulationsmodell" insbesondere Hardware-Modelle, Software-Programme und Testbench-Modelle verstanden. Ein solches System kann zum Beispiel mit Hilfe von drei Klassen von Sprachen beschrieben werden: mit einer oder mehreren Hardware-Beschreibungssprachen ("Hardware Description Language", HDL) für die Hardware, mit einer oder mehreren Programmiersprachen ("Programming Language", PL) für die Software und mit einer Testbenchsprache ("Test Language", TL oder "Hardware Verification Language", HVL) für die Testbench.

Bei der Fehlersuche in Datenverarbeitungsprogrammen wird üblicherweise das auf Fehler zu untersuchende Modell bzw. Programm unter Kontrolle einer Fehlersucheinrichtung bzw. eines Fehlersuchprogramms, eines sogenannten Debuggers, ausgeführt. Hierzu wird das Fehlersuchprogramm aufgerufen, das wiederum das zu untersuchende Modell bzw. Programm aufruft, welches in der Regel einen Unterbrechungspunkt enthält. Bei Erreichen dieses Unterbrechungspunktes wird die weitere Abarbeitung des zu untersuchenden Programms gestoppt und zum Debugger zurückgekehrt.

Bei herkömmlichen Fehlersuchverfahren wird für jede Klasse der oben angegebenen Sprachen, d.h. für jedes Modell, ein eigenes Fehlersuchprogramm mit eigenen Kommandos und einer eigenen Oberfläche verwendet. Dem Vorteil, dass für jede Klasse von Sprachen ein optimaler Debugger eingesetzt werden kann, steht der Nachteil gegenüber, dass sich die verschiedenen Debugger für die unterschiedlichen Modelle unterschiedlich verhalten und dass vom Benutzer viele Kommando-Schnittstellen und Fenster am Bildschirm seines Rechnerarbeitsplatzes zu kontrollieren sind.

Es ist daher eine Aufgabe der vorliegenden Erfindung, ein Fehlersuchverfahren für ein System mit unterschiedlichen Simulationsmodellen, das die obigen Nachteile vermeidet und insbesondere vom Benutzer einfach bedient und kontrolliert werden kann, sowie eine entsprechende Fehlersuchvorrichtung bereitzustellen.

Diese Aufgabe wird durch ein Fehlersuchverfahren mit den Merkmalen von Patentanspruch 1 bzw. durch eine Fehlersuchvorrichtung mit den Merkmalen von Patentanspruch 9 gelöst. Vorteilhafte Ausgestaltungen und Weiterbildungen der Erfindung sind Gegenstand der Unteransprüche.

Erfindungsgemäß wird zur Fehlersuche in einem System mit mehreren unterschiedlichen Simulationsmodellen, wie zum Beispiel einem Hardware-Modell, einem Software-Modell/Programm und einem Testbench-Modell, vom Benutzer eine übergeordnete Fehlersucheinrichtung (Debugger) ausgeführt, welche ihrerseits mit verschiedenen untergeordneten Fehlersucheinrichtungen (Debugger), die jeweils den unterschiedlichen Simulationsmodellen zugeordnet sind, kommuniziert und diese aktiviert. Die untergeordneten Fehlersucheinrichtungen greifen dann jeweils entsprechend auf das ihnen zugeordnete Simulationsmodell zu, um einen Fehler in dem System (bzw. in dem jeweiligen Simulationsmodell) aufzufinden. Durch die Bereitstellung der übergeordneten einheitlichen und gemeinsamen Fehlersucheinrichtung kann dem Benutzer eine einheitliche Schnittstelle mit eigenen Kommandos, eigenem Kommandointerpreter und eigener Oberfläche zur Verfügung gestellt werden, um die Fehlersuche in den einzelnen Simulationsmodellen für den Benutzer zu vereinfachen. Gleichzeitig können für die unterschiedlichen Simulationsmodelle jeweils optimale Debugger als untergeordnete Fehlersucheinrichtungen verwendet werden, so dass trotz der vereinfachten Bedienung für den Benutzer ein optimales Ergebnis der Fehlersuche gewährleistet werden kann.

Die übergeordnete Fehlersucheinrichtung kann gegebenenfalls auch direkt, d.h. ohne Zwischenschaltung einer entsprechenden untergeordneten Fehlersucheinrichtung, auf das jeweilige Simulationsmodell kontrollierend und analysierend zugreifen.

Vorzugsweise erfolgt die Kommunikation zwischen der einheitlichen übergeordneten Fehlersucheinrichtung und den einzelnen untergeordneten und speziellen Fehlersucheinrichtungen in Form einer Master-Worker- oder Master-Slave-Kommunikation, wobei die übergeordnete Fehlersucheinrichtung als Master und die untergeordneten Fehlersucheinrichtungen als Workers oder Slaves fungieren.

Die vorliegende Erfindung kann bevorzugt bei der Entwicklung bzw. bei der Simulation/Verifikation von elektrischen Schaltungen (Hardwareentwurf) eingesetzt werden.

Die vorliegende Erfindung wird nachfolgend anhand verschiedener Ausführungsbeispiele unter Bezugnahme auf die beiliegende Zeichnung näher erläutert. Darin zeigen:
- Fig. 1: eine schematische Darstellung des Aufbaus eines ersten Ausführungsbeispiels einer Vorrichtung zur Fehlersuche gemäß der vorliegenden Erfindung;
- Fig. 2: eine schematische Darstellung des Aufbaus eines zweiten Ausführungsbeispiels einer Vorrichtung zur Fehlersuche gemäß der vorliegenden Erfindung;
- Fig. 3: ein grob skizziertes Ablaufdiagramm zur Erläuterung eines Funktionsablaufs eines Fehlersuchverfahrens gemäß der vorliegenden Erfindung;
- Fig. 4: ein grob skizziertes Ablaufdiagramm zur Erläuterung eines weiteren Funktionsablaufs eines Fehlersuchverfahrens gemäß der vorliegenden Erfindung; und
- Fig. 5: ein grob skizziertes Ablaufdiagramm zur Erläuterung eines nochmals weiteren Funktionsablaufs eines Fehlersuchverfahrens gemäß der vorliegenden Erfindung.

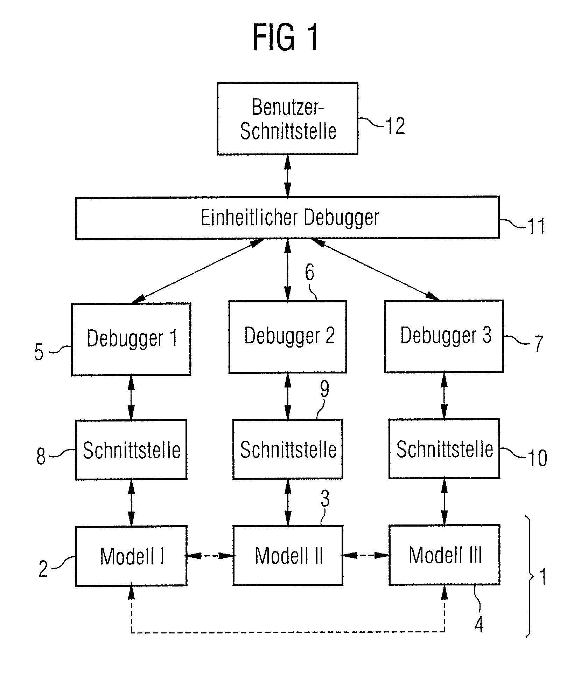

In Fig. 1 ist zunächst der grundsätzliche Aufbau eines ersten Ausführungsbeispiels einer Vorrichtung zur Durchführung des erfindungsgemäßen Fehlersuchverfahrens dargestellt.

Das zu simulierende System 1 ist im vorliegenden Fall aus drei unterschiedlichen Simulationsmodellen 2-4, die nachfolgend der Einfachheit halber verkürzt als Modell bezeichnet werden, aufgebaut. Die (in Fig. 1 mit I bis III bezeichneten) Modelle 2, 3, 4 sind beispielsweise ein Hardware-Modell, ein Software-Modell/Programm und ein Testbench-Modell, in denen das System jeweils durch entsprechende Sprachen wie eingangs erläutert beschrieben ist. Weiter kommunizieren die in gespeicherter Form vorliegenden unterschiedlichen Modelle 2, 3, 4 üblicherweise auch untereinander. Die Anzahl der zum Einsatz kommenden Modelle bzw. Klassen von Sprachen ist dabei nicht festgelegt, wobei auch lediglich zwei Sprachen, z.B. eine Hardware-Beschreibungssprache und eine Testbenchsprache, verwendet werden können, d.h. es ist insbesondere auch möglich, ein nur aus einem Hardware-Modell und einem Software-Programm bestehendes System zu simulieren und auf Fehler zu untersuchen.

Alle Modelle 2, 3, 4 des zu simulierenden Systems 1 verfügen über eine entsprechende Schnittstelle 8, 9, 10 zu einer speziell auf das jeweilige Modell abgestimmten Fehlersucheinrichtung in Form von Debuggern 5-7, d.h. für jedes Modell 2, 3, 4 ist ein optimaler Debugger mit eigenen, unterschiedlichen Kommandos vorgesehen.

Im Gegensatz zu herkömmlichen Fehlersuchvorrichtungen muss der Benutzer bei der erfindungsgemäßen Fehlersuchvorrichtung jedoch nicht mit den mehreren unterschiedlichen speziellen Debuggern 5-7 arbeiten und diese kontrollieren. Dem Benutzer steht vielmehr eine übergeordnete Fehlersucheinrichtung in Form eines einheitlichen Debuggers 11 zur Verfügung, auf die er über eine geeignete Benutzer-Schnittstelle 12 zugreifen kann. Dieser einheitliche Debugger 11 besitzt einen eigenen Kommando-Interpreter mit eigenen Kommandos und gegebenenfalls einer eigenen graphischen Oberfläche. Dieser Kommando-Interpreter setzt seine eigenen Kommandos in die jeweiligen Kommandos der unterschiedlichen speziellen Debugger 5, 6, 7 um und führt die so umgesetzten Kommandos den einzelnen speziellen Debuggern 5, 6, 7 zur Abarbeitung entsprechender Fehlersuchoperationen durch Zugriff auf das jeweilige Modell zu. Umgekehrt setzt der Kommando-Interpreter des einheitlichen Debuggers 11 die ihm von den verschiedenen speziellen Debuggern 5, 6, 7 zugeleiteten Kommandos bzw. Ausgaben und Rückmeldungen derart um, dass sie dem Benutzer über die Benutzer-Schnittstelle 12 in einer einheitlichen Form dargestellt und ausgegeben werden können.

Bei der Fehlersuchvorrichtung gemäß diesem Ausführungsbeispiel muss der Benutzer nicht wie bei bisherigen Systemen mehrere Debugger 5-7 parallel kontrollieren, sondern der Benutzer bedient bzw. kontrolliert nur den einheitlichen Debugger 11. Somit ist die Durchführung der Fehlersuche für den Benutzer wesentlich vereinfacht.

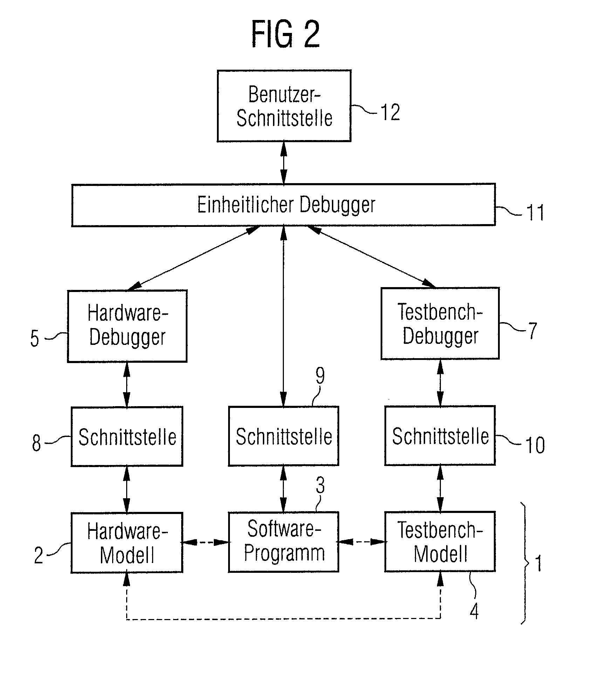

Eine alternative Ausführungsform der erfindungsgemäßen Fehlersuchvorrichtung ist in Fig. 2 dargestellt. Gleiche Bestandteile der Anordnung sind dabei mit den gleichen Bezugszeichen wie bei dem ersten Ausführungsbeispiel von Fig. 1 versehen.

Das zweite Ausführungsbeispiel unterscheidet sich von dem in Fig. 1 dargestellten Ausführungsbeispiel dadurch, dass der spezielle Debugger 6 für das Software-Programm 3 entfällt. Dies bedeutet, dass der einheitliche Debugger 11 in diesem Fall direkt auf die Debugger-Schnittstelle 9 des Software-Programms 3 kontrollierend und analysierend zugreift. In UNIX-Betriebssystemen wird im Zusammenhang mit einer derartigen Debugger-Schnittstelle 9 der Begriff "Common Object Format" verwendet. Für den Fall, dass auch bezüglich des Hardware-Modells 2 und/oder des Testbench-Modells 4 derartige allgemeine Schnittstellen 8 bzw. 10 vorhanden sind, können analog der Hardware-Debugger 5 und der Testbench-Debugger 7 entfallen, da der einheitliche Debugger 11 dann direkt auf das Hardware-Modell 2 bzw. das Testbench-Modell 4 zugreifen kann.

Die Kommunikation zwischen dem einheitlichen Debugger 11 und den verwendeten speziellen untergeordneten Debuggern 5, 6, 7 beruht bei beiden Ausführungsbeispielen der erfindungsgemäßen Fehlersuchvorrichtung vorzugsweise auf einer sogenannten Master-Slave-Kommunikation. Dabei fungiert während der gesamten Simulation der einheitliche Debugger 11 als Master, während die einzelnen speziellen Debugger 5, 6, 7 als Slaves arbeiten. Somit wird jede Anfrage des einheitlichen Debuggers 11 an einen der eingesetzten Debugger 5, 6, 7 von diesem mit einer Bestätigung quittiert. Eine solche Bestätigung kann beispielsweise lediglich ein Prompt, d.h. eine erneute Eingabeaufforderung des jeweiligen Debuggers 5-7, sein. Zusätzlich zu dieser Bestätigung können bei Bedarf, zum Beispiel wenn von dem übergeordneten einheitlichen Debugger 11 ein Befehl zur Berechnung des Wertes eines Objekts an einen untergeordneten speziellen Debugger 5-7 gegeben wird, von dem jeweiligen speziellen Debugger 5, 6, 7 an den einheitlichen Debugger 11 weitere Informationen, wie beispielsweise der Wert dieses Objekts, zurückgegeben werden. Dabei läuft die Kommunikation zwischen dem einheitlichen Debugger 11 und den speziellen Debuggern 5-7 vollautomatisiert und rechnergestützt ab, d.h. von dem einheitlichen Debugger 11 wird automatisch eine Benutzereingabe erfasst und in eine entsprechende Ansteuerung/Aktivierung der speziellen Debugger 5-7 umgesetzt, welche ihrerseits die entsprechenden Fehlersuchoperationen automatisch/rechnergestützt durchführen.

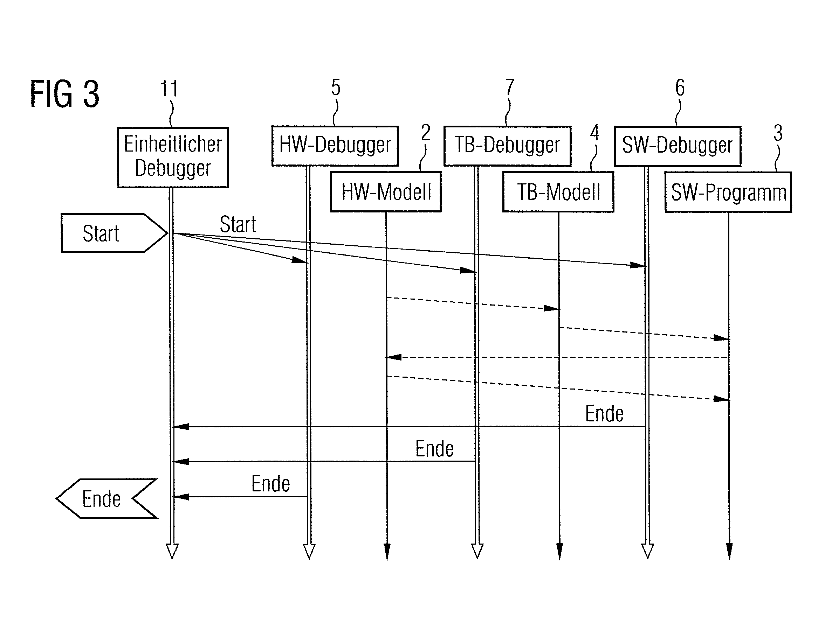

Anhand der Fig. 3 bis 5 werden nun beispielhaft verschiedene Funktionsabläufe erläutert, die bei einem Fehlersuchverfahren mit der oben beschriebenen Fehlersuchvorrichtung auftreten können. Selbstverständlich ist das Fehlersuchverfahren gemäß der vorliegenden Erfindung nicht auf diese drei grundlegenden Funktionsabläufe beschränkt, sondern diese dienen lediglich dem besseren Verständnis der Erfindung, und der Fachmann wird den erfindungsgemäßen Aufbau ohne weiteres auf weitere Funktionsabläufe übertragen, die bei einer Fehlersuche in Systemen mit mehreren unterschiedlichen Modellen benötigt werden.

In Fig. 3 ist zunächst der Funktionsablauf für ein Kommando dargestellt, das von dem einheitlichen Debugger 11 an alle vorhandenen speziellen Debugger 5-7 geschickt wird.

Bei dem gezeigten Beispiel wird von dem Benutzer über die Benutzer-Schnittstelle 12 beispielsweise das Kommando "Start" an den einheitlichen Debugger 11 gegeben. Der einheitliche Debugger bzw. Haupt-Debugger 11 setzt das Kommando "Start" in die äquivalenten Kommandos der speziellen Debugger 5, 6, 7, wie beispielsweise "run" oder "start", um und leitet diese umgesetzten Kommandos an die einzelnen speziellen Debugger 5, 6, 7 weiter. Wie bei dem in Fig. 1 gezeigten Fall werden als spezielle untergeordnete Debugger ein Hardware-Debugger (HW-Debugger) 5, der auf ein Hardware-Modell (HW-Modell) 2 zugreift, ein Software-Debugger (SW-Debugger) 6, der auf ein Software-Programm/Modell (SW-Programm) 3 zugreift, und ein Testbench-Debugger (TB-Debugger) 7, der auf ein Testbench-Modell (TB-Modell) 4 zugreift, verwendet.

Nachdem alle Debugger 5, 6, 7 aufgrund des von dem einheitlichen Debugger 11 zugeführten Startkommandos die Abarbeitung ihrer Modelle bzw. Programme 2, 3, 4 begonnen haben, beginnt in der Regel eine beliebige Abfolge von Interaktionen zwischen den Modellen bzw. Programmen, wie dies in Fig. 3 durch Pfeile angedeutet ist. Ist die Ausführung der Modelle 2, 3, 4 beendet, dann schicken die zugeordneten Debugger 5, 6, 7 jeweils eine spezifische "Ende"-Meldung an den einheitlichen Debugger 11, wobei diese "Ende"-Meldungen möglicherweise auch korreliert erfolgen können. Das Haupt-Fehlersuchprogramm 11 setzt dann diese "Ende"-Meldungen um und gibt eine entsprechende "Ende"-Rückmeldung an die Benutzer-Schnittstelle 12 aus.

Zur Verwaltung aller an einer Simulation des Systems 1 beteiligten Objekte muss der einheitliche Debugger 11 die Objekte aller Modelle 2, 3, 4 zusammenfassen. Dies bedeutet, dass unterschiedliche Namensbereiche (Hardware, Software, Testbench) gemeinsam verwaltet werden müssen. Da grundsätzlich die Möglichkeit besteht, dass zum Beispiel eine Variable des Software-Programms 3 den gleichen Namen wie ein Signal des Hardware-Modells 2 besitzt, ist es von Vorteil, wenn der einheitliche Debugger 11 in der Lage ist, die lokalen Namensbereiche der einzelnen Modelle 2, 3, 4 intern zu globalen Namen zu erweitern, um sie unterscheiden zu können.

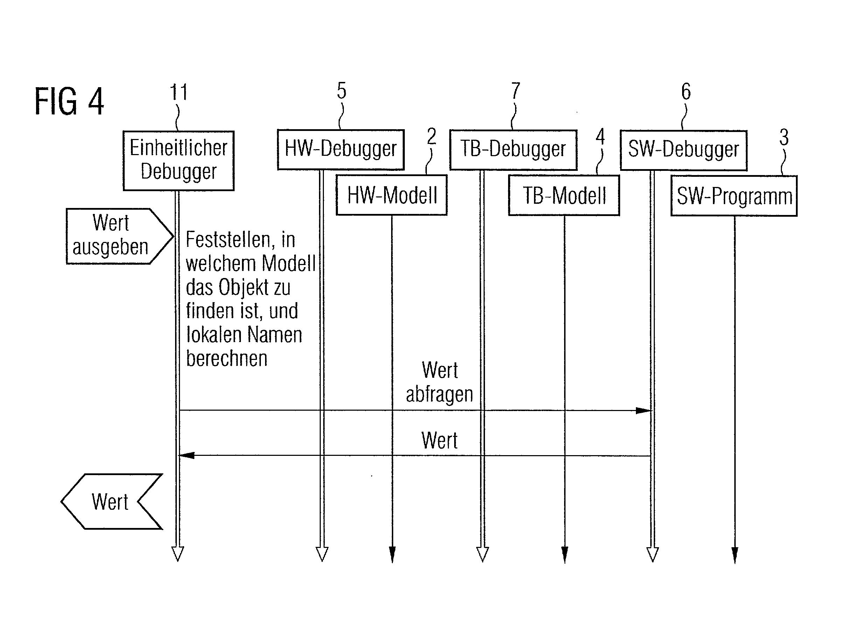

Anhand von Fig. 4 wird nun der Funktionsablauf für ein vom Benutzer eingegebenes Kommando zur Abfrage des Wertes eines Objekts von einem bestimmten Modell erläutert.

Zunächst muss der einheitliche Debugger 11 anhand des globalen Objektnamens, zu dem der Wert abgefragt werden soll, bestimmen, in welchem Modell 2, 3, 4 das gewünschte Objekt vorhanden ist. Dann ermittelt der einheitliche Debugger 11 den entsprechenden lokalen Namen des Objekts und fragt mittels entsprechendem Kommando den Wert des Objekts bei dem jeweiligen untergeordneten speziellen Debugger (im vorliegenden Fall bei dem Software-Debugger 6) ab, unter dessen Kontrolle das bestimmte Modell 3 abläuft, zu dem das Objekt gehört. Der spezielle Debugger 6 gibt dann den gewünschten Wert des Objekts an den einheitlichen Debugger 11 zurück, welcher diesen Wert, gegebenenfalls nach einer weiteren Bearbeitung, an die Benutzer-Schnittstelle 12 weiterleitet.

Auf ähnliche Weise können durch den Benutzer Abbruchbedingungen gesetzt oder gelöscht oder Werte von Objekten gesetzt werden. In solchen Fällen wird dann von dem jeweiligen speziellen Debugger 5, 6, 7 anstelle des Wertes des Objekts, wie oben beschrieben, nur eine Bestätigung an den einheitlichen Debugger 11 zurückgegeben.

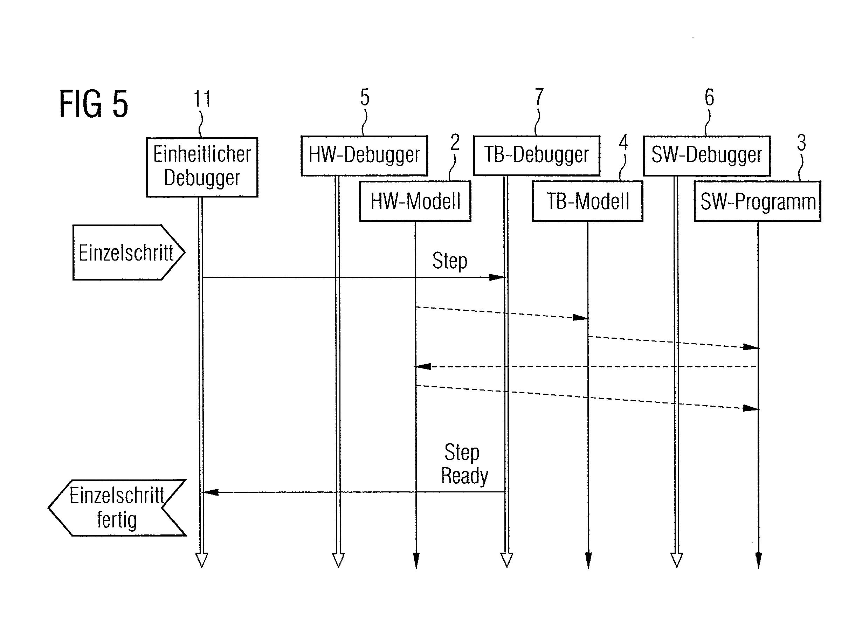

Schließlich wird als drittes Beispiel eines Funktionsablaufs anhand von Fig. 5 die Abarbeitung eines Einzelschritt-Kommandos veranschaulicht.

Aufgrund eines vom Benutzer über die Benutzer-Schnittstelle 12 eingegebenen Einzelschritt-Kommandos generiert der einheitliche Debugger 11 ein entsprechendes Einzelschritt-Kommando für das gewünschte Modell (im vorliegenden Fall das Testbench-Modell 4) und gibt dieses an den dem Modell 4 zugeordneten Debugger 7 weiter. Daraufhin wird das Modell 4 im Einzelschritt-Modus betrieben, während die anderen Modelle 2, 3 auch ohne Unterbrechung und nicht im Einzelschritt-Modus ablaufen können. Nach Beendigung des Einzelschritts gibt der Debugger 7 eine Bestätigung, dass der Einzelschritt von dem Modell 4 abgeschlossen ist, an den einheitlichen Debugger 11 zurück, der diese Bestätigung in ein entsprechendes Kommando für die Benutzer-Schnittstelle 12 umsetzt.

Bei dem oben beschriebenen Funktionsablauf ist es im allgemeinen unerheblich, ob ein Einzelschritt über eine einzige Einzelanweisung oder über mehrere zusammengefasste Einzelanweisungen abläuft. Außerdem kann das Einzelschritt-Kommando je nach Kommando des Benutzers sowohl nur für ein Modell als auch für mehrere oder für alle Modelle 2, 3, 4 gelten.

## Patentansprüche

1. Fehlersuchverfahren für ein durch mehrere unterschiedliche Simulationsmodelle simuliertes System,
wobei das System (1) in den einzelnen Simulationsmodellen (2-4) durch Beschreibungssprachen unterschiedlicher Klassen beschrieben wird, und
wobei den einzelnen Simulationsmodellen (2-4) unterschiedliche erste Fehlersucheinrichtungen (5-7) zum Auffinden eines Fehlers jeweils mittels Zugriff auf das entsprechende Simulationsmodell (2-4) zugeordnet sind,
**gekennzeichnet durch** die Schritte
a) automatisches Erfassen einer Benutzereingabe mit Hilfe einer zweiten Fehlersucheinrichtung (11), welche den ersten Fehlersucheinrichtungen (5-7) übergeordnet ist, und
b) automatisches Ansteuern der ersten Fehlersucheinrichtungen (5-7) **durch** die zweite Fehlersucheinrichtung (11) in Abhängigkeit von der Benutzereingabe, um **durch** Zugriff auf das jeweilige Simulationsmodell (2-4) einen Systemfehler zu finden.

2. Fehlersuchverfahren nach Anspruch 1,
**dadurch gekennzeichnet,**
**dass** ein Simulationsmodell (2) ein Hardware-Simulationsmodell ist, in dem das System (1) durch eine Hardware-Beschreibungssprache beschrieben ist, wobei diesem Simulationsmodell (2) als eine entsprechende erste Fehlersucheinrichtung ein Hardware-Debugger (5) zugeordnet ist.

3. Fehlersuchverfahren nach Anspruch 1 oder 2,
**dadurch gekennzeichnet,**
**dass** ein Simulationsmodell (4) ein Testbench-Simulationsmodell ist, in dem das System (1) durch eine Testbench-Sprache beschrieben ist, wobei diesem Simulationsmodell (4) als eine entsprechende erste Fehlersucheinrichtung ein Testbench-Debugger (7) zugeordnet ist.

4. Fehlersuchverfahren nach einem der vorhergehenden Ansprüche,
**dadurch gekennzeichnet,**
**dass** ein Simulationsmodell (3) ein Software-Simulationsmodell ist, in dem das System (1) durch eine Programmiersprache beschrieben ist, wobei diesem Simulationsmodell (3) als eine entsprechende erste Fehlersucheinrichtung ein Software-Debugger (6) zugeordnet ist.

5. Fehlersuchverfahren nach einem der vorhergehenden Ansprüche,
**dadurch gekennzeichnet,**
**dass** die übergeordnete zweite Fehlersucheinrichtung (11) direkt auf mindestens ein Simulationsmodell (3) ohne Zwischenschaltung einer ersten Fehlersucheinrichtung zugreift.

6. Fehlersuchverfahren nach einem der vorhergehenden Ansprüche,
**dadurch gekennzeichnet,**
**dass** von der zweiten Fehlersucheinrichtung (11) eine Benutzereingabe automatisch in entsprechende Kommandos für die einzelnen ersten Fehlersucheinrichtungen (5-7) umgesetzt wird.

7. Fehlersuchverfahren nach einem der vorhergehenden Ansprüche,
**dadurch gekennzeichnet,**
**dass** von den ersten Fehlersucheinrichtungen (5-7) automatisch in Abhängigkeit von der Ansteuerung durch die zweite Fehlersucheinrichtung (11) durch Zugriff auf das jeweilige Simulationsmodell (2-4) eine entsprechende Fehlersuchoperation durchgeführt wird, wobei von der zweiten Fehlersucheinrichtung (11) automatisch eine von den einzelnen ersten Fehlersucheinrichtungen (5-7) im Laufe der jeweiligen Fehlersuchoperation generierte Rückmeldung erfasst und an den Benutzer ausgegeben wird.

8. Fehlersuchverfahren nach einem der vorhergehenden Ansprüche,
**dadurch gekennzeichnet,**
**dass** die Kommunikation zwischen der zweiten Fehlersucheinrichtung (11) und den ersten Fehlersucheinrichtungen (5-7) in Form einer Master-Worker-Kommunikation erfolgt, wobei die zweite Fehlersucheinrichtung (11) als Master und die ersten Fehlersucheinrichtungen (5-7) als Workers fungieren.

9. Vorrichtung zur Fehlersuche für ein durch mehrere unterschiedliche Simulationsmodelle simuliertes System,
wobei das System (1) in den einzelnen Simulationsmodellen (2-4) durch Beschreibungssprachen unterschiedlicher Klassen beschrieben ist,
mit mehreren unterschiedlichen ersten Fehlersucheinrichtungen (5-7), welche jeweils einem entsprechenden Simulationsmodell (2-4) zugeordnet sind, zum Auffinden eines Systemfehlers mittels Zugriff auf das entsprechende Simulationsmodell (2-4),
**dadurch gekennzeichnet,**
**dass** eine den ersten Fehlersucheinrichtungen (5-7) übergeordnete zweite Fehlersucheinrichtung (11) vorgesehen ist,
wobei die zweite Fehlersucheinrichtung (11) zum automatischen Erfassen einer Benutzereingabe und zum automatischen Ansteuern der ersten Fehlersucheinrichtungen (5-7) in Abhängigkeit von der Benutzereingabe zum Auffinden eines Fehlers durch Zugriff auf das jeweilige Simulationsmodell (2-4) ausgestaltet ist.

10. Vorrichtung zur Fehlersuche nach Anspruch 9,
**dadurch gekennzeichnet,**
**dass** ein Simulationsmodell (2) ein Hardware-Simulationsmodell ist, in dem das System (1) durch eine Hardware-Beschreibungssprache beschrieben ist, wobei diesem Simulationsmodell (2) als eine entsprechende erste Fehlersucheinrichtung ein Hardware-Debugger (5) zugeordnet ist.

11. Vorrichtung nach Anspruch 9 oder 10,
**dadurch gekennzeichnet,**
**dass** ein Simulationsmodell (4) ein Testbench-Simulationsmodell ist, in dem das System (1) durch eine Testbench-Sprache beschrieben ist, wobei diesem Simulationsmodell (4) als eine entsprechende erste Fehlersucheinrichtung ein Testbench-Debugger (7) zugeordnet ist.

12. Vorrichtung zur Fehlersuche nach einem der Ansprüche 9-11,
**dadurch gekennzeichnet,**
**dass** ein Simulationsmodell (3) ein Software-Simulationsmodell ist, in dem das System (1) durch eine Programmiersprache beschrieben ist, wobei diesem Simulationsmodell (3) als eine entsprechende erste Fehlersucheinrichtung ein Software-Debugger (6) zugeordnet ist.

13. Vorrichtung zur Fehlersuche nach einem der Ansprüche 9-12,
**dadurch gekennzeichnet,**
**dass** die zweite Fehlersucheinrichtung (11) direkt auf mindestens ein Simulationsmodell (3) ohne Zwischenschaltung einer entsprechenden ersten Fehlersucheinrichtung zugreift.

14. Vorrichtung zur Fehlersuche nach einem der Ansprüche 9-13,
**dadurch gekennzeichnet,**
**dass** die zweite Fehlersucheinrichtung (11) zur automatischen Umsetzung der Benutzereingabe in entsprechende Kommandos für die einzelnen ersten Fehlersucheinrichtungen (5-7) ausgestaltet ist.

15. Vorrichtung zur Fehlersuche nach einem der Ansprüche 9-14,
**dadurch gekennzeichnet,**
**dass** die einzelnen ersten Fehlersucheinrichtungen (5-7) zur automatischen Durchführung entsprechender Fehlersuchoperationen in Abhängigkeit von der Ansteuerung durch die zweite Fehlersucheinrichtung (11) durch Zugriff auf das jeweilige Simulationsmodell (2-4) ausgestaltet sind, und dass die zweite Fehlersucheinrichtung (11) zum automatischen Erfassen von Rückmeldungen, welche von den ersten Fehlersucheinrichtungen (5-7) im Laufe der jeweiligen Fehlersuchoperationen generiert werden, ausgestaltet ist, um diese an den Benutzer auszugeben.

16. Vorrichtung zur Fehlersuche nach einem der Ansprüche 9-15,
**dadurch gekennzeichnet,**
**dass** die einzelnen ersten Fehlersucheinrichtungen (5-7) und die zweite Fehlersucheinrichtung (11) zur Realisierung einer Master-Slave-Kommunikation zwischen der ersten Fehlersucheinrichtung (11) als Master einerseits und den einzelnen zweiten Fehlersucheinrichtungen (5-7) als Workers andererseits ausgestaltet sind.

17. Vorrichtung zur Fehlersuche nach einem der Ansprüche 9-16,
**dadurch gekennzeichnet,**
**dass** den einzelnen Simulationsmodellen (2-4) jeweils eine Schnittstelle (8-10) zur Anbindung an die jeweilige erste Fehlersucheinrichtung (5-7) zugeordnet ist.

18. Vorrichtung zur Fehlersuche nach einem der Ansprüche 9-17,
**dadurch gekennzeichnet,**
**dass** die einzelnen Simulationsmodelle (2-4) durch Einrichtungen realisiert sind, welche zur Kommunikation untereinander ausgestaltet sind.

19. Verwendung einer Vorrichtung nach einem der Ansprüche 9-18 für den Entwurf von elektronischen Schaltungen.
